# EUROPÄISCHE PATENTSCHRIFT

(11) **EP 0 582 095 B1**
(45) Veröffentlichungstag und Bekanntmachung des Hinweises auf die Patenterteilung: **19.04.1995**
(21) Anmeldenummer: 93110720.5
(22) Anmeldetag: 05.07.1993
(51) Int. Cl.: F16L 3/127

(54) **Haltevorrichtung aus Kunststoff**
Holding device made from plastic material
Dispositif de fixation en matière plastique

(30) Priorität: 04.08.1992 DE 4225742
(43) Veröffentlichungstag der Anmeldung: 09.02.1994
(73) Patentinhaber: TRW United-Carr GmbH & Co. KG, D-67677 Enkenbach-Alsenborn (DE)
(72) Erfinder: Kraus, Willibald, D-67269 Grünstadt (DE)
(74) Vertreter: Schieschke, Klaus, Dipl.-Ing.

(56) Entgegenhaltungen:
- DE-A- 2 807 119
- DE-U- 7 805 976
- FR-A- 2 483 541
- FR-A- 2 515 776
- GB-A- 1 305 717
- US-A- 3 126 183
- US-A- 3 737 128
- US-A- 4 334 659
- US-A- 4 386 752
- US-A- 4 635 886

## Beschreibung

Die Erfindung bezieht sich auf eine Haltevorrichtung aus Kunststoff nach dem Oberbegriff der Ansprüche 1 bzw. 10.

Als Stand der Technik ist bereits eine Haltevorrichtung bekannt, bei welcher der Haltebereich zwei Flansche aufweist, welche durch eine Schraubverbindung nach Einbringen eines rohrförmigen Körpers miteinander verbunden sind (britische Patentanmeldung 2 187 255). Die beiden Flansche umschließen einen profilierten Endbereich eines Zapfens, welcher seinerseits über einen Befestigungsbereich mit einem Träger verbindbar ist. Es ergibt sich hierdurch eine hoher baulicher Aufwand infolge der Mehrteiligkeit der Vorrichtung sowie Montageaufwand, um die gesamte Einheit funktionsgerecht an einem Träger zu befestigen.

Weiterhin ist eine Haltevorrichtung aus Kunststoff bekannt, bei welcher unterhalb einer Tragplatte ein halbrundförmiger Befestigungsbereich angeordnet ist, während oberhalb der Tragplatte als Haltebereich ein stegartiges Element vorgesehen ist, das in Schließstellung nach Einbringung mindestens eines rohrförmigen Körpers in eine Gegenrast eingreift (GB-PS 1 022 820).

Weiterer Stand der Technik ist eine Stellfußmutter aus Kunststoff, welche zwei Halbschalen besitzt, die durch ein Filmscharnier miteinander verbunden sind. Diese Halbschalen weisen jeweils einen konischen Innendurchmesser auf und gehen stirnseitig in den Befestigungsbereich über, so daß nach Schließen der beiden Halbschalen die gesamte Einheit in einer rechteckig ausgebildeten Trägeröffnung einlagerbar ist (DE-GM 75 03 424.1). Diese bekannte Vorrichtung ist lediglich als Stellfußmutter konzipiert und nicht in der Lage, einerseits an einen Träger befestigt zu werden und andererseits ein durchlaufendes rohrförmiges Teil, beispielsweise einen Schlauch oder ein Rohr zu haltern.

Als Stand der Technik, von dem die vorliegende Erfindung ausgeht, ist eine Haltevorrichtung bekannt (GB-A-1305717), welche so gestaltet ist, daß erst durch Einsetzen des Befestigungsbereichs die Schließstellung erreicht wird. Damit kann sich der Nachteil ergeben, daß während der Durchführung der Montage diese Haltevorrichtung aufklappt und somit stets Vorsorge dafür getragen werden muß, daß dieser Zustand nicht eintritt.

Weiterer Stand der Technik ist eine Haltevorrichtung (US-A-4 386 752), bei welcher beidseitig der beiden Halbschalen jeweils eine Rastvorrichtung angeordnet ist, um die beiden Halbschalen funktionssicher miteinander zu verbinden. Eine Halbschale ist darüber hinaus mit einem mit einem Träger verbindbaren Befestigungsbereich versehen. Es ergibt sich damit eine konstruktiv aufwendige Ausbildung.

Zum Stand der Technik zählt darüber hinaus ein Kunststoff-Halteclip für elektrische Kabel (DE-U-78 05 976), bei welchem im Bereich von zwei Halbschalen federnde Stege angeordnet sind. Diese federnden Stege können verschiedene Längen und Abmessungen aufweisen, um Rohrleitungen unterschiedlichen Durchmessers einwandfrei zu haltern. Auch bei dieser bekannten Konstruktion ist der Befestigungsbereich so gestaltet, daß er erst beim Einsatz in die Öffnung eines Trägers in seine Schließstellung gelangt.

Demgegenüber liegt der vorliegenden Erfindung die Aufgabe zugrunde, eine Haltevorrichtung der eingangs genannten Art zu schaffen, welche bei geringem Bauaufwand und einfachem konstruktivem Aufbau schnell und funktionsgerecht zu montieren ist.

Diese Aufgabe wird erfindungsgemäß dadurch gelöst, daß der Befestigungsbereich als geschlitzte Hülse ausgebildet ist, in deren Innenbereich die Rastvorrichtung mit einem Rastelement in Schließstellung einlagerbar ist, wobei die Rastvorrichtung zwei einander gegenüberliegende, federnde, konisch zulaufende Stege aufweist, welche in Schließstellung zumindest teilweise über den Außenumfang der geschlitzten Hülse ragen und Teil des Befestigungsbereichs sind. Hierdurch ergibt sich der Vorteil, daß der Befestigungsbereich bereits vormontiert werden kann, so daß die gesamte Einheit dann in diesem vormontierten Zustand in die Öffnung eines Trägers einsetzbar ist.

Alternativ besteht zur Lösung der Aufgabe die Möglichkeit, daß der Befestigungsbereich und die Rastvorrichtung jeweils als miteinander verrastbarer Teil eines Tannenbaumbolzens ausgebildet sind oder daß der Befestigungsbereich und die Rastvorrichtung jeweils als miteinander verrastbarer Teil einer mit Innenprofilierung versehenen Befestigungshülse gestaltet werden.

Darüber hinaus liegt eine andere Lösungsmöglichkeit darin, daß der Befestigungsbereich gleichzeitig als Rastvorrichtung ausgebildet ist, wobei der Befestigungsbereich aus zwei ineinandergreifenden Elementen aus hartem Kunststoffmaterial besteht, an welchen endseitig mindestens ein Band aus weicherem Kunststoffmaterial im Zweikomponenten-Spritzverfahren angeordnet ist, welches im montierten Zustand die beiden Haltezonen bildet.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:
- Fig. 1: eine Draufsicht auf die Haltevorrichtung in Offenstellung;
- Fig. 2: eine Seitenansicht der Haltevorrichtung in Offenstellung;
- Fig. 3: eine Vorderansicht der Haltevorrichtung in Offenstellung;
- Fig. 4: eine Vorderansicht der erfindungsgemäßen Haltevorrichtung in Schließstellung;
- Fig. 5a-e: verschiedene Gestaltungsmöglichkeiten der einzelnen Elemente eines Teils der Haltevorrichtung;
- Fig. 6a-i: verschiedene Gestaltungsmöglichkeiten eines anderen Teils der Haltevorrichtung;
- Fig. 7a-e: eine andere Ausführungsmöglichkeit der erfindungsgemäßen Haltevorrichtung mit verschiedenen Gestaltungsvarianten;
- Fig. 8a-b: eine Gestaltungsvariante der Ausführungsform nach Fig. 7c und e in Seitenansicht bzw. im Mittelschnitt;
- Fig. 9: eine andere Ausführungsform der Erfindung, teils geschnitten;
- Fig. 10: eine andere Gestaltung der umlaufenden Lippe mit gebrochener Halbschale;
- Fig. 11a-b, 12a-b, u. 13a-b: jeweils in Seitenansicht bzw. in Draufsicht die Gestaltung der Scharniere der beiden Halbschalen;
- Fig. 14: eine andere Ausführungsmöglichkeit der Erfindung in Seitenansicht;
- Fig. 15: die Ausführungsform nach Fig. 14 in Draufsicht;
- Fig. 16a,b: zwei weitere Ausführungsmöglichkeiten der Erfindung in Seitenansicht.

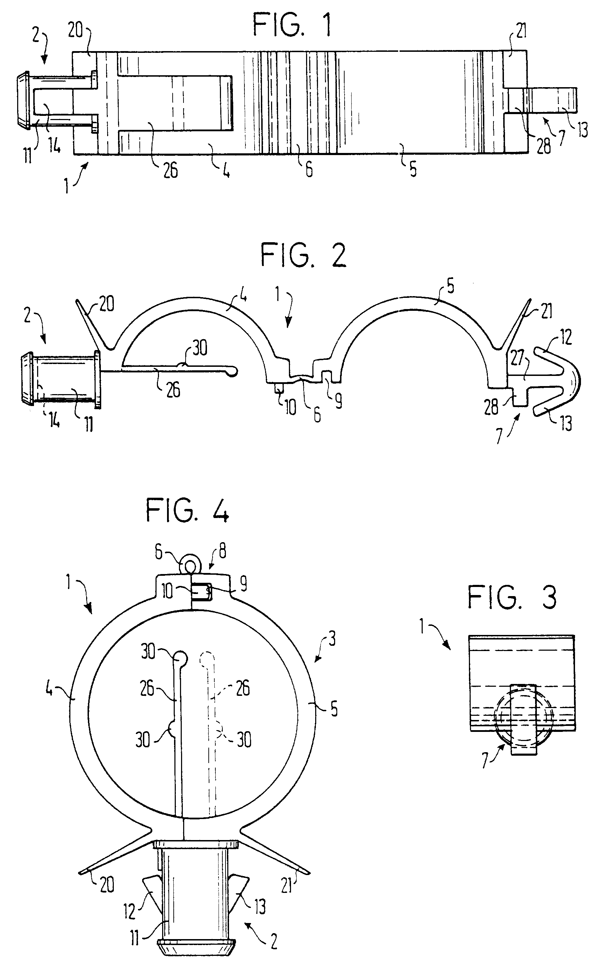

Gemäß Fig. 1 bis 4 besteht die aus Kunststoff hergestellte Haltevorrichtung 1 aus einem mit einem nicht näher dargestellten Träger verbindbaren Befestigungsbereich 2 und einem einen nicht näher dargestellten rohrförmigen Körper umgreifenden Haltebereich 3. Dieser Haltebereich 3 umfaßt zwei Halbschalen 4 und 5, welche gemäß Fig. 4 an der dem Befestigungsbereich 2 benachbarten Seite miteinander verbunden sind.

Wie aus Fig. 1 bis 3 ersichtlich, ist die Haltevorrichtung 1 einstückig ausgebildet. Im oberen Bereich sind die beiden Halbschalen 4 und 5 durch mindestens ein Filmband 6 miteinander verbunden. Im Bereich dieses Filmbandes ist eine Justierung 8 vorgesehen, welche so ausgestaltet ist, daß die Halbschale 5 eine Ausnehmung 9 aufweist, wohingegen die Halbschale 4 einen Steg 10 besitzt. Gemäß Fig. 4 lagert sich in Schließstellung der Haltevorrichtung 1 der Steg 10 der Halbschale 4 in die Ausnehmung 9 der Halbschale 5 ein, so daß die beiden Halbschalen 4 und 5 funktionssicher und exakt justiert miteinander verbunden sind.

Der Befestigungsbereich 2 ist bei dem Ausführungsbeispiel nach Fig. 1 bis 4 als Hülse 11 ausgebildet, welche mit einem Schlitz 14 versehen ist. Diese Hülse 11 ist einstückig mit der Halbschale 4 verbunden. Die Halbschale 5 weist eine Rastvorrichtung 7 auf, welche beispielsweise zwei federnde, konisch zulaufende Stege 12, 13 besitzt. Diese beiden Stege 12, 13 sind an einem Hauptkörper 27 befestigt, welcher mit einem Rastelement 28 ausgestattet ist. Die Breite des Rastelements 28, des Hauptkörpers 27 und der Stege 12, 13 ist auf die Breite des Schlitzes 14 der Hülse 11 abgestellt.

Wird nun die erfindungsgemäße Haltevorrichtung 1 aus der Offenstellung gemäß Fig. 2 in die Schließstellung gemäß Fig. 4 überführt, so lagern sich das Rastelement 28, der Hauptkörper 27 und die beiden federnden Stege 12 und 13 im Inneren der Hülse 11 ein und bewirken einen funktionssicheren Verschluß. Die Rastvorrichtung 7 ist außerdem zugleich Teil des Befestigungsbereichs 2. Die beiden federnden Stege 12 und 13 ragen gemäß Fig. 4 mit ihrem vorderen Bereich über die Hülse 11 hinaus, so daß nunmehr die Haltevorrichtung 1 in Schließstellung über den Befestigungsbereich 2 in einer Trägeröffnung einsetzbar ist, wobei die beiden Stege 12 und 13 die eine Seite des Trägers hintergreifen.

Zwischen der Rastvorrichtung 7 und dem Befestigungsbereich 2 weist jede Halbschale 4 bzw. 5 eine elastische Lippe 20 bzw. 21 auf, welche bei der Ausführungsform nach Fig. 1 bis 4 rechteckig ausgebildet ist. In Schließstellung gemäß Fig. 4 beaufschlagen nun die federnden Lippen 20 und 21 die andere Seite des nicht näher dargestellten Trägers, so daß die gesamte Haltevorrichtung 1 über den Befestigungsbereich 2 funktionssicher in einer Trägeröffnung befestigt ist: Auf der einen Seite hintergreifen die federnden Stege 12 und 13 die Trägeröffnung; auf der anderen Seite beaufschlagen die federnden Lippen 20 und 21 die Trägeröffnung.

Um auch rohrförmige Körper geringeren Durchmessers zwischen den beiden Halbschalen 4 und 5 der Haltevorrichtung 1 zu haltern, kann z.B. eine Halbschale 4 mit einem Federfinger 26 versehen sein, welcher beispielsweise einseitig im Befestigungsbereich 2 der Halbschale 4 gelagert ist. Der Federfinger 26 kann gemäß Fig. 1 eine geringere Breite als die Halbschale 4 aufweisen, wobei zudem die Länge des Federfingers geringer als der Innendurchmesser der Halbschale 4 ist. Um entsprechende Rohre geringeren Durchmessers funktionssicher zwischen den geschlossenen Halbschalen 4 und 5 zu haltern, kann der Federfinger darüber hinaus an mindestens einer Seite mit einer Wulst 30 versehen sein, welche die entsprechenden Rohre beaufschlagt und somit die Haltewirkung durch die Haltevorrichtung 1 verbessert.

Erfindungsgemäß besteht auch die Möglichkeit, daß der Federfinger 26 an der Halbschale 5 (wie gestrichelt dargestellt) angeordnet ist. Es können sich auch zwei Federfinger gegenüber stehen. Weitere Ausführungsvarianten bestehen darin, daß die Federfinger 26 an einer Halbschale 4 bzw. 5 oder an beiden Halbschalen im Winkel zueinander angeordnet sind. Hierbei können mehrere Federfinger beispielsweise strahlenförmig verlaufen.

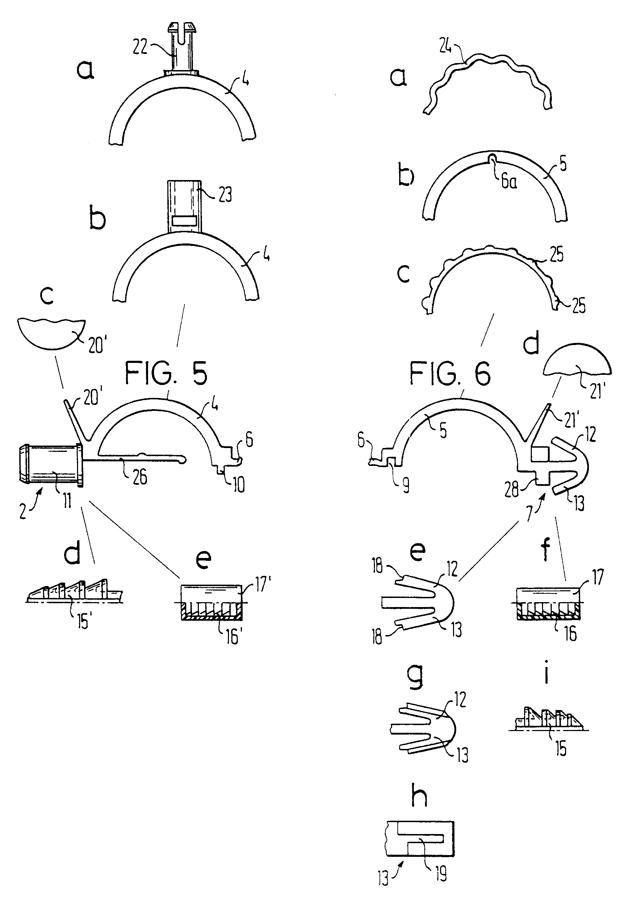

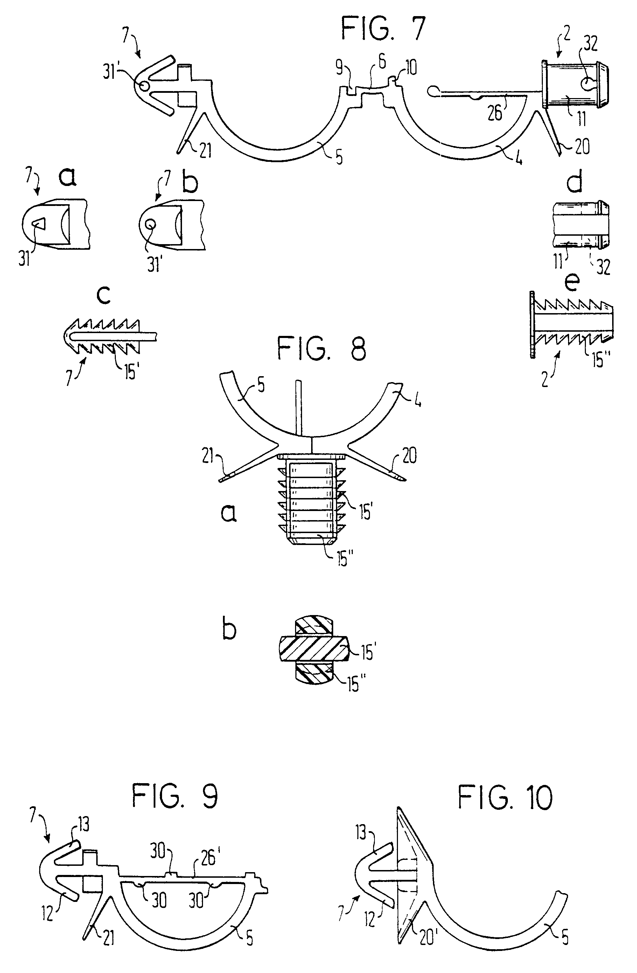

Die Figuren 5 und 6 stellen verschiedene Gestaltungsmöglichkeiten einzelner Elemente der Haltevorrichtung 1 dar: Nach Fig. 5a und b besteht die Möglichkeit, daß beispielsweise die Halbschale 4 am Außenumfang einen Einlagerungszapfen 22 bzw. eine Einlagerungshülse 23 aufweist. Damit kann sich beispielsweise eine benachbarte Halbschale oder ein anderes Element über den Einlagerungszapfen 22 in die Einlagerungshülse 23 der Halbschale 4 einlagern, so daß baukastenförmig nebeneinander mehrere schalenförmige oder andersgestaltete Elemente mit der erfindungsgemäßen Haltevorrichtung zu verbinden sind.

Die federnde Lippe 20 bzw. 21' zwischen dem Befestigungsbereich 2 bzw. der Rastvorrichtung 7 kann nach Fig. 5c bzw. 6d halbrundförmig ausgebildet sein, so daß in Schließstellung der erfindungsgemäßen Haltevorrichtung sich die beiden Teile der elastischen Lippe 20' bzw. 21' ergänzen und einen kreisförmigen geschlossenen Außenumfang bilden. Statt der Kreisform kann in Schließstellung beispielsweise auch Ovalform der elastischen Lippen 20' bzw. 21' vorgesehen sein.

Die Halbschalen 4 und 5 müssen nicht starr ausgebildet sein. Nach Fig. 6a besteht die Möglichkeit, daß beispielsweise die jeweilige Halbschale Wellenform 24 aufweist; nach Fig. 6b kann die jeweilige Halbschale mit einem weiteren Filmscharnier 6a versehen sein; nach Fig. 6c kann die jeweilige Halbschale mit längs verlaufenden Stegen 25 am Außenumfang ausgestattet werden, so daß auch hier eine elastische Formgebung erzielt wird.

Alternative Gestaltungen des Befestigungsbereich 2 bzw. der Rastvorrichtung 7 sind in den Figuren 5d und e bzw. 6e - 6i dargestellt: Nach Fig. 5d und 6i können zwei Teile 15 und 15' in Schließstellung durch Verrastung miteinander den Befestigungsbereich 2 in Form eines sogenannten "Tannenbaumbolzens" bilden; nach Fig. 5e und 6f kann eine Befestigungshülse aus den beiden Teilen 17 und 17' bestehen, welche innenseitig mit entsprechenden Profilierungen 16 und 16' versehen sind, die den Befestigungsbereich 2 bilden.

Nach Fig. 6e können die in Fig. 2 und 4 dargestellten federnden Stege 12 und 13 im Endbereich jeweils mit Eingriffskanten 18 versehen sein, so daß sich die federnden Stege insgesamt besser und funktionssicherer hinter einer Trägeröffnung einlagern. Um auch verschiedene Dicken von Trägern zu erfassen, besteht nach Fig. 6g und 6h außerdem die Möglichkeit, daß die jeweiligen federnden Stege durch einen Schlitz 19 getrennt sind und verschiedene Länge aufweisen.

Nach Fig. 7 können die Rastvorrichtung 7 und der Befestigungsbereich 2 jeweils mit mindestens einem Vorsprung 31' bzw. einer dazu passenden Bohrung 32 versehen sein. Hierbei kann dieser Vorsprung 31 nach Fig. 7a etwa Dreiecksform aufweisen oder nach Fig. 7b als Noppenvorsprung 31' ausgebildet sein. Dieser Vorsprung 31 bzw. 31' kann sich in zusammengebauter Form in der entsprechend gestalteten Ausnehmung 32 der Hülse 11 des Befestigungsbereichs 2 einlagern. Damit rastet der Vorsprung 31 bzw. 31' in der Bohrung 32 ein, wodurch auf einfache Weise eine Vorzentrierung der Einheit gewährleistet ist.

Nach Fig. 7c bzw. e können die Rastvorrichtung 7 und der Befestigungsbereich 2 als Teil eines sogenannten "Tannenbaumbolzens" 15' bzw. 15'' gestaltet sein. Hierbei ist der Teil 15', welcher die Rastvorrichtung 7 darstellt, so beschaffen, daß er sich in zusammengebautem Zustand in dem Tannenbaumbolzenteil 15'' des Befestigungsbereichs 2 einlagern kann.

Fig. 8 zeigt, wie sich der Teil des Tannenbaumbolzens 15' in dem entsprechend ausgebildeten Gegenstück 15'' des Tannenbaumbolzens einlagert. Fig. 8b zeigt hierbei den Schnitt durch diese beiden Teile. Wie ersichtlich, ergibt sich damit eine zusammengebaute Einheit, bestehend aus den Teilen 15' und 15'', welche nahezu einen rundumlaufenden Tannenbaumbolzen darstellt.

Nach Fig. 9 besteht die Möglichkeit, den Federfinger 26' beidseitig am Innenumfang der Halbschalen 4, 5 zu befestigen, so daß sich eine verbesserte Haltewirkung ergibt. Hierbei kann der Federfinger 26' eine geringere Breite als die Halbschale besitzen. Er kann außerdem aus weicherem Kunststoff als dem der Halbschalen 4, 5 bestehen und im Zweikomponenten-Spritzverfahren an diesen angeformt werden.

Die Federfinger 26' können einseitig oder beidseitig mit mindestens einer Wulst 30 versehen sein, um den zu halternden Elementen eine sichere Anlage zu geben.

Nach Fig. 10 besteht bezüglich der Gestaltung der Lippe die Möglichkeit, diese als umlaufende Dichtlippe 20' auszubilden und lediglich an einer der beiden Halbschalen 4, 5 anzuformen. Infolge dieser einteiligen Bauform ergibt sich eine Verbesserung der Dichtwirkung.

In allen vorhergehenden Ausführungsformen ist die Haltevorrichtung 1 einstückig ausgebildet, d.h. die beiden Halbschalen 4 und 5 sowie das Filmband 6 bilden eine einstückige Einheit.

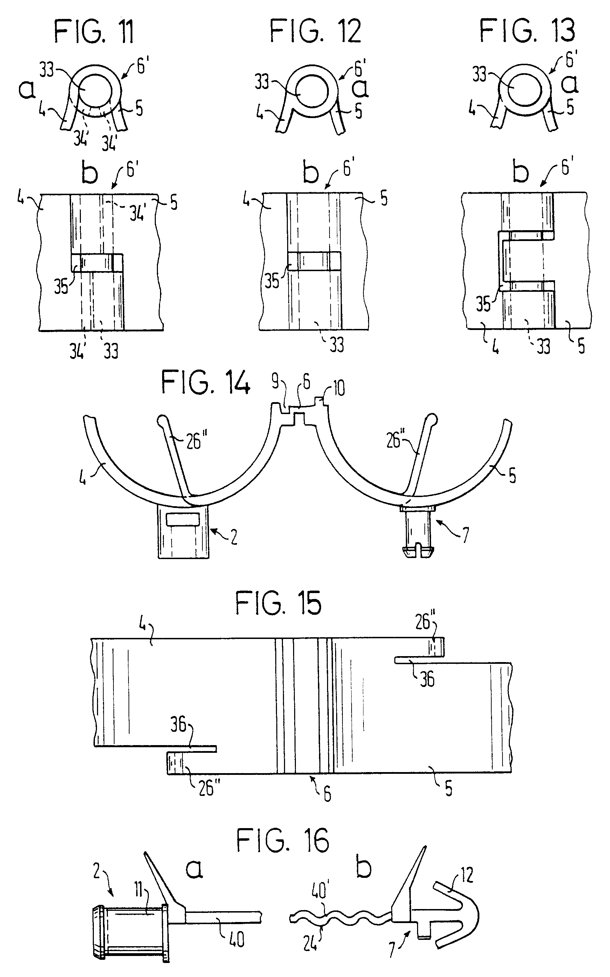

Bei den Ausführungsformen nach Fig. 11 bis 13 besteht die Möglichkeit, daß die beiden Halbschalen jeweils ein speziell gestaltetes Scharnier 6' aufweisen, wobei die beiden zusammenwirkenden Bereiche des Scharniers der beiden Halbschalen 4 und 5 durch einen Stift 33 miteinander gelenkig verbunden sind.

Nach Fig. 11a und b weist das jeweilige Scharnierelement 6' der beiden Halbschalen 4 und 5 im unteren Bereich einen Schlitz 34 bzw. 34' auf. Damit umgibt das jeweilige Scharnierelement 6' den Stift 33 nicht über seinen gesamten Außenumfang.

Aus Fig. 11b geht hervor, daß zwischen den beiden Bereichen der Scharnierelemente 6' ein Zwischenraum 35 vorliegt, so daß insgesamt eine gute Leichtgängigkeit des Scharnierelements 6' gewährleistet ist.

Nach Fig. 12a und b bildet das jeweilige Scharnierelement 6' der Hauptschalen 4, 5 eine geschlossene Einheit, so daß der betreffende in den Scharnierbereichen eingelagerte Stift 33 einseitig an seinem Außenumfang von den betreffenden Teilen des Scharnierelements 6' umgeben ist. Wiederum ist ein Zwischenraum 35 zur Gewährleistung der Leichtgängigkeit des Scharnierelements 6' vorgesehen.

Fig. 13 stellt eine weitere alternative Gestaltungsmöglichkeit des Scharnierelements 6' dar. Hier weist die Halbschale 4 zwei äußere Scharnierelementbereiche 6' auf, zwischen welchen in dem Zwischenraum 35 ein der Halbschale 5 zugeordneter Scharnierelementbereich 6' liegt. Die drei Bereiche des Scharnierelements 6' der beiden Halbschalen 4 und 5 werden wiederum von einem Stift 33 durchsetzt. Dieser Stift 33 kann beispielsweise als Metallstift ausgebildet sein. Alternativ besteht auch die Möglichkeit, daß der Stift 33, ebenso wie die beiden Halbschalen 4 und 5 aus Kunststoffmaterial bestehen, so daß bereits während der Herstellung der erfindungsgemäßen Haltevorrichtung 1 dieser Kunststoffstift 33 mit eingespritzt wird und damit in einem Arbeitsgang die beiden Halbschalen über das Scharnierelement 6' miteinander verbunden werden. Während bei den vorhergehenden Ausführungsformen der Federfinger 26 etwa nach Fig. 1 im mittleren Bereich der betreffenden Halbschale 4 bzw. 5 angeordnet ist, besteht nach Fig. 14 und 15 auch die Möglichkeit, daS Federfinger 26'' im Bereich der Seitenwandung der beiden Halbschalen 4 bzw. 5 vorgesehen sind. Diese Federfinger 26'' sind durch einen Schlitz 36 von der jeweiligen Halbschale 4 bzw. 5 getrennt. Nach Fig. 14 und 15 liegen damit zwei schräg nach oben ragende Federfinger 26'' im Bereich der Halbschale 4 bzw. 5 vor, so daß sich im montierten Zustand diese Federfinger 26'' einerseits nicht behindern, andererseits den zu halternden Rohrelementen jedoch einen guten Sitz verleihen.

Nach Fig. 16 kann an den Befestigungsbereich 2, beispielsweise mit Hülse 11 und Steg 12, welcher gleichzeitig die Rastvorrichtung 7 bildet, über ein Zweikomponenten-Spritzverfahren mindestens ein Band 40 aus gegenüber dem Material des Befestigungsbereichs 2 weicherem Material angeformt werden. Dieses Band 40 bildet nach Fig. 16a beim Umschlingen eines nicht näher dargestellten, zu halternden Gegenstands die beiden Halbschalen 4, 5. Es besteht auch die Möglichkeit, nach Fig. 16b das Band 40' analog Fig. 6a in Profilform, z.B. Wellenform 24', zu gestalten, so daß eine verbesserte Elastizität erzielt wird. Insgesamt ergibt sich eine besonders einfach aufgebaute vorteilhafte Gestaltung der Haltevorrichtung.

Insgesamt liegt eine große Variationsbreite der einzelnen Elemente vor, wobei in jedem Fall die Haltevorrichtung 1 im montierten Zustand zwei Halbschalen 4 und 5 bildet, welche durch mindestens ein Filmband 6 bzw. ein Scharnierelement 6' miteinander verbunden sein können und im Befestigungsbereich 2 eine Rastvorrichtung 7 aufweisen, welche gleichzeitig Teil des Befestigungsbereichs 2 ist.

## Patentansprüche

1. Haltevorrichtung (1) aus Kunststoff zur Befestigung mindestens eines rohrförmigen Körpers an einem Träger, mit einem mit dem Träger verbindbaren Befestigungsbereich (2) und einem den rohrförmigen Körper umgreifenden Haltebereich (3) aus zwei Halbschalen (4, 5), welche an der dem Befestigungsbereich (2) benachbarten Seite miteinander verbunden sind, wobei die beiden Halbschalen (4, 5) an der dem Befestigungsbereich (2) gegenüberliegenden Seite durch mindestens ein Scharnierelement (6) und an der dem Befestigungsbereich (2) benachbarten Seite durch eine im Befestigungsbereich (2) angeordnete Rastvorrichtung (7) in Schließstellung gegeneinander verbunden sind,
dadurch gekennzeichnet,
daß der Befestigungsbereich (2) als geschlitzte Hülse (11) ausgebildet ist, in deren Innenbereich die Rastvorrichtung (7) mit einem Rastelement (28) in Schließstellung einlagerbar ist und
daß die Rastvorrichtung (7) zwei einander gegenüberliegende, federnde, konisch zulaufende Stege (12, 13) aufweist, welche in Schließstellung zumindest teilweise über den Außenumfang der geschlitzen Hülse (11) ragen und Teil des Befestigungsbereichs (2) sind.

2. Haltevorrichtung nach Anspruch 1,
dadurch gekennzeichnet,
daß die federnden Stege (12, 13) jeweils im Endbereich mit Eingriffskanten (18) versehen sind (Fig 6e).

3. Haltevorrichtung nach Anspruch 1,
daß die federnden Stege (12, 13) durch mindestens einen Schlitz (19) geteilt sind, wobei jeder Teil eine unterschiedliche Länge aufweist (Fig. 6g, Fig. 6h)

4. Haltevorrichtung nach Anspruch 1,
dadurch gekennzeichnet,
daß die geschlitzte Hülse (11) und die Rastvorrichtung (7) jeweils mit mindestens einer Ausnehmung (32) bzw. einem damit zusammenwirkenden Vorsprung (31, 31') versehen sind.

5. Haltevorrichtung nach einem der vorhergehenden Ansprüche,
dadurch gekennzeichnet,
daß mindestens eine Halbschale (4) am Innenumfang einen Federfinger (26) aufweist, wobei der Federfinger (26) auf mindestens einer Seite mit einer Wulst (30) versehen ist.

6. Haltevorrichtung nach Anspruch 5,
dadurch gekennzeichnet,
daß der Federfinger aus einem weicheren und die jeweilige Halbschale (4, 5) aus einem härteren Kunststoffmaterial bestehen, wobei beide Materialien im Zweikomponenten-Spritzverfahren miteinander verbunden sind.

7. Haltevorrichtung nach einem der vorhergehenden Ansprüche,
dadurch gekennzeichnet,
daß die beiden Halbschalen (4, 5) im Bereich des Scharnierelements eine Justierung (8) aufweisen und daß die Justierung (8) als Ausnehmung (9) in der eine Halbschale (5) und als in die Ausnehmung (9) einlagerbarer Steg (10) in der anderen Halbschale (14) ausgebildet ist.

8. Haltevorrichtung (1) aus Kunststoff zur Befestigung mindestens eines rohrförmigen Körpers an einem Träger, mit einem mit dem Träger verbindbaren Befestigungsbereich (2) und einem den rohrförmigen Körper umgreifenden Haltebereich (3) aus zwei Halbschalen (4, 5), welche an der dem Befestigungsbereich (2) benachbarten Seite miteinander verbunden sind, wobei die beiden Halbschalen (4, 5) an der dem Befestigungsbereich (2) gegenüberliegenden Seite durch mindestens ein Scharnierelement (6) und an der dem Befestigungsbereich (2) benachbarten Seite durch eine im Befestigungsbereich (2) angeordnete Rastvorrichtung (7) in Schließstellung miteinander verbunden sind,
dadurch gekennzeichnet,
daß der Befestigungsbereich (2) und die Rastvorrichtung (7) jeweils als miteinander verrastbarer Teil (15, 15') eines Tannenbaumbolzens ausgebildet sind (Fig. 5d, Fig. 6i).

9. Haltevorrichtung aus Kunststoff zur Befestigung mindestens eines rohrförmigen Körpers an einem Träger, mit einem mit dem Träger verbindbaren Befestigungsbereich (2) und einem den rohrförmigen Körper umgreifenden Haltebereich (3) aus zwei Halbschalen (4, 5), welche an der dem Befestigungsbereich (2) benachbarten Seite miteinander verbunden sind, wobei die beiden Halbschalen (4, 5) an der dem Befestigungsbereich (2) gegenüberliegenden Seite durch mindestens ein Scharnierelement (6) und an der dem Befestigungsbereich (2) benachbarten Seite durch eine im Befestigungsbereich (2) angeordnete Rastvorrichtung (7) in Schließstellung miteinander verbunden sind,
dadurch gekennzeichnet,
daß der Befestigungsbereich (2) und die Rastvorrichtung (7) jeweils als miteinander verrastbarer Teil (17, 17') einer mit Innenprofilierung (16, 16') versehenen Befestigungshülse ausgebildet sind (Fig. 5e, Fig. 6f).

10. Haltevorrichtung aus Kunststoff zur Befestigung mindestens eines rohrförmigen Körpers an einem Träger, mit einem mit dem Träger verbindbaren Befestigungsbereich (2) und einem den rohrförmigen Körper umgreifenden Haltebereich (3) aus zwei Haltezonen, welche an der dem Befestigungsbereich (2) benachbarten Seite miteinander verbunden sind,
dadurch gekennzeichnet,
daß der Befestigungsbereich (2) gleichzeitig als Rastvorrichtung (7) ausgebildet ist und
daß der Befestigungsbereich (2) aus zwei ineinandergreifenden Elementen aus hartem Kunststoffmaterial besteht, an welchen endseitig mindestens ein Band (40,40') aus weicherem Kunststoffmaterial im Zweikomponenten-Spritzverfahren angeformt ist, welches im montierten Zustand die beiden Haltezonen (4,5) bildet.

11. Haltevorrichtung nach Anspruch 10,
dadurch gekennzeichnet,
daß das Band (40') profiliert ausgebildet ist.

12. Haltevorrichtung nach Anspruch 10,
dadurch gekennzeichnet,
daß das Band (40) Wellenform (24) aufweist.

## Claims

1. Plastic retaining device (1) for fastening at least one tubular body on a carrier, having a fastening region (2), which can be connected to the carrier, and having a retaining region (3) which engages around the tubular body and is made up of two half-shells (4, 5) which are connected to one another on the side adjacent to the fastening region (2), the two half-shells (4, 5), in the closed position, being connected against one another by at least one hinge element (6), on the side opposite the fastening region (2), and, on the side adjacent to the fastening region (2), by a latching device (7) which is arranged in the fastening region (2), characterized in that the fastening region (2) is designed as a slotted sleeve (11) in whose inner region, in the closed position, the latching device (7) can be inserted by means of a latching element (28), and in that the latching device (7) exhibits two mutually opposite, resilient, conically tapering webs (12, 13) which, in the closed position, project at least partially beyond the outer circumference of the slotted sleeve (11) and are part of the fastening region (2).

2. Retaining device according to Claim 1, characterized in that the resilient webs (12, 13) are provided with engagement edges (18) in each case in the end region (Figure 6e).

3. Retaining device according to Claim 1, characterized in that the resilient webs (12, 13) are divided by at least one slot (19), each part being of a different length (Figure 6g, Figure 6h).

4. Retaining device according to Claim 1, characterized in that the slotted sleeve (11) and the latching device (7) are respectively provided with at least one cutout (32) and a protrusion (31, 31') interacting therewith.

5. Retaining device according to one of the preceding claims, characterized in that at least one half-shell (4) exhibits a resilient finger (26) on the inner circumference, the resilient finger (26) being provided with a bead (30) on at least one side.

6. Retaining device according to Claim 5, characterized in that the resilient finger consists of a relatively soft plastic material and the respective half-shell (4, 5) consists of a relatively hard plastic material, the two materials being connected to one another by two-component injection moulding.

7. Retaining device according to one of the preceding claims, characterized in that the two half-shells (4, 5) exhibit an adjustment means (8) in the region of the hinge element, and in that the adjustment means (8) is designed, in one half-shell (5), as a cutout (9) and, in the other half-shell (4), as a web (10) which can be inserted into the cutout (9).

8. Plastic retaining device (1) for fastening at least one tubular body on a carrier, having a fastening region (2), which can be connected to the carrier, and having a retaining region (3) which engages around the tubular body and is made up of two half-shells (4, 5) which are connected to one another on the side adjacent to the fastening region (2), the two half-shells (4, 5), in the closed position, being connected to one another by at least one hinge element (6), on the side opposite the fastening region (2), and, on the side adjacent to the fastening region (2), by a latching device (7) which is arranged in the fastening region (2), characterized in that the fastening region (2) and the latching device (7) are each designed as part (15, 15') of a fir-tree bolt, it being possible to latch said parts to one another (Figure 5d, Figure 6i).

9. Plastic retaining device for fastening at least one tubular body on a carrier, having a fastening region (2), which can be connected to the carrier, and having a retaining region (3) which engages around the tubular body and is made up of two half-shells (4, 5) which are connected to one another on the side adjacent to the fastening region (2), the two half-shells (4, 5), in the closed position, being connected to one another by at least one hinge element (6), on the side opposite the fastening region (2), and, on the side adjacent to the fastening region (2), by a latching device (7) which is arranged in the fastening region (2), characterized in that the fastening region (2) and the latching device (7) are each designed as part (17, 17') of a fastening sleeve provided with an inner profiling (16, 16'), it being possible to latch said parts to one another (Figure 5e, Figure 6f).

10. Plastic retaining device for fastening at least one tubular body on a carrier, having a fastening region (2), which can be connected to the carrier, and having a retaining region (3) which engages around the tubular body and is made up of two retaining zones which are connected to one another on the side adjacent to the fastening region (2), characterized in that the fastening region (2) is designed, at the same time, as a latching device (7), and in that the fastening region (2) is composed of two interengaging elements which consist of a hard plastic material and on which there is integrally formed by two-component injection moulding, on the end side, at least one band (40, 40') which consists of a relatively soft plastic material and, in the mounted state, forms the two retaining zones (4, 5).

11. Retaining device according to Claim 10, characterized in that the band (40') is of a profiled design.

12. Retaining device according to Claim 10, characterized in that the band (40') is in undulating form (24).

## Revendications

1. Dispositif de retenue (1) en matière plastique pour relier au moins un corps tubulaire à un support, comprenant une zone de fixation (2) pouvant être reliée au support, et une zone de retenue (3) qui ceinture le corps tubulaire et est composée de deux demi-coquilles (4, 5) reliées l'une à l'autre sur le côté voisin de la zone de fixation (2), les deux demi-coquilles (4, 5) étant reliées l'une contre l'autre en position de fermeture, sur le côté tourné à l'opposé de la zone de fixation (2), par l'intermédiaire d'au moins un élément (6) du type charnière et, sur le côté voisin de la zone de fixation (2), par l'intermédiaire d'un système d'encrantage (7) situé dans la zone de fixation (2),
caractérisé par le fait
que la zone de fixation (2) est réalisée sous la forme d'une douille fendue (11) dans la région intérieure de laquelle le système d'encrantage (7) peut venir se nicher, en position de fermeture, par un élément encrantable (28) ; et
que le système d'encrantage (7) présente deux membrures élastiques (12, 13) mutuellement opposées qui s'achèvent tronconiquement et qui, en position de fermeture, dépassent au moins partiellement au-delà du pourtour extérieur de la douille fendue (11) et font partie de la zone de fixation (2).

2. Dispositif de retenue selon la revendication 1,
caractérisé par le fait
que les membrures élastiques (12, 13) sont respectivement pourvues, dans la région extrême, d'arêtes (18) de venue en prise (figure 6e).

3. Dispositif de retenue selon la revendication 1,
caractérisé par le fait
que les membrures élastiques (12, 13) sont scindées par au moins une fente (19), chaque partie présentant une longueur différente (figure 6g, figure 6h).

4. Dispositif de retenue selon la revendication 1,
caractérisé par le fait
que la douille fendue (11) et le système d'encrantage (7) sont munis, respectivement, d'au moins un évidement (32) et d'une protubérance (31, 31') coopérant avec ce dernier.

5. Dispositif de retenue selon l'une des revendications précédentes,
caractérisé par le fait
qu'au moins une demi-coquille (4) comporte un doigt élastique (26) sur le pourtour intérieur, le doigt élastique (26) étant doté d'un bourrelet (30) sur au moins un côté.

6. Dispositif de retenue selon la revendication 5,
caractérisé par le fait
que le doigt élastique et la demi-coquille (4, 5) considérée consistent, respectivement, en une matière plastique tendre et en une matière plastique plus dure, les deux matières étant reliées l'une à l'autre par le procédé de moulage par injection à deux composants.

7. Dispositif de retenue selon l'une des revendications précédentes,
caractérisé par le fait
que les deux demi-coquilles (4, 5) présentent un système d'ajustement (8) dans la région de l'élément du type charnière ; et par le fait que le système d'ajustement (8) est réalisé, dans l'une (5) des demi-coquilles, sous la forme d'un évidement (9) et, dans l'autre demi-coquille (14), sous la forme d'un mentonnet (10) pouvant s'engager dans l'évidement (9).

8. Dispositif de retenue (1) en matière plastique pour relier au moins un corps tubulaire à un support, comprenant une zone de fixation (2) pouvant être reliée au support, et une zone de retenue (3) qui ceinture le corps tubulaire et est composée de deux demi-coquilles (4, 5) reliées l'une à l'autre sur le côté voisin de la zone de fixation (2), les deux demi-coquilles (4, 5) étant reliées l'une à l'autre en position de fermeture, sur le côté tourné à l'opposé de la zone de fixation (2), par l'intermédiaire d'au moins un élément (6) du type charnière et, sur le côté voisin de la zone de fixation (2), par l'intermédiaire d'un système d'encrantage (7) situé dans la zone de fixation (2),
caractérisé par le fait
que la zone de fixation (2) et le système d'encrantage (7) sont respectivement réalisés sous la forme d'une partie (15, 15'), à solidarisation emboîtable, d'une cheville à ardillons (figure 5d, figure 6i).

9. Dispositif de retenue en matière plastique pour relier au moins un corps tubulaire à un support, comprenant une zone de fixation (2) pouvant être reliée au support, et une zone de retenue (3) qui ceinture le corps tubulaire et est composée de deux demi-coquilles (4, 5) reliées l'une à l'autre sur le côté voisin de la zone de fixation (2), les deux demi-coquilles (4, 5) étant reliées l'une à l'autre en position de fermeture, sur le côté tourné à l'opposé de la zone de fixation (2), par l'intermédiaire d'au moins un élément (6) du type charnière et, sur le côté voisin de la zone de fixation (2), par l'intermédiaire d'un système d'encrantage (7) situé dans la zone de fixation (2),
caractérisé par le fait
que la zone de fixation (2) et le système d'encrantage (7) sont respectivement réalisés sous la forme d'une partie (17, 17'), à solidarisation emboîtable, d'une douille de fixation pourvue d'un profilage intérieur (16, 16') (figure 5e, figure 6f).

10. Dispositif de retenue en matière plastique pour relier au moins un corps tubulaire à un support, comprenant une zone de fixation (2) pouvant être reliée au support, et une zone de retenue (3) qui ceinture le corps tubulaire et est composée de deux zones d'arrêt reliées l'une à l'autre sur le côté voisin de la zone de fixation (2),
caractérisé par le fait
que la zone de fixation (2) est simultanément conçue comme un système d'encrantage (7) ; et
que la zone de fixation (2) se compose de deux éléments en matière plastique dure s'imbriquant l'un dans l'autre, aux extrémités desquels au moins un ruban (40, 40') en une matière plastique plus tendre est venu de moulage solidaire, par le procédé de moulage par injection à deux composants, et matérialise les deux zones d'arrêt (4, 5) à l'état monté.

11. Dispositif de retenue selon la revendication 10,
caractérisé par le fait
que le ruban (40') est de réalisation profilée.

12. Dispositif de retenue selon la revendication 10,
caractérisé par le fait
que le ruban (40) présente une forme ondulée (24).
